# EUROPEAN PATENT APPLICATION

(11) **EP 2 557 002 A1**
(43) Date of publication of application: **13.02.2013**
(21) Application number: 11010080.7
(22) Date of filing: 22.12.2011
(51) Int. Cl.: B60S 1/40, B60S 1/38

(54) **Universal connection element of windshield wiper**

(30) Priority: 08.08.2011 CN 201120285483 U
(71) Applicant: Yang, Chih-Ming, Taipei City 110 (TW); Chang, Chuan-Chih, Taipei City 110 (TW)
(72) Inventor: Yang, Chih-Ming, Taipei City 110 (TW); Chang, Chuan-Chih, Taipei City 110 (TW)
(74) Representative: Urner, Peter

(57) **Abstract**

A universal connection element of a windshield wiper is closed. The universal connection element has a combining stage (1). The combining stage (1) has a fastening portion (11), a roof wall (12) formed along a direction opposite to the fastening portion (11), two side walls (13) formed corresponding to the roof wall (12), and an end wall (14). Each side wall (13) has a through hole (131) corresponding to each other. The end wall (14) has an elastic piece (141) extending therefrom. An end terminal of the elastic piece (141) has a raised portion (142) arranged on the same plane to the roof wall (12). Therefore, the combining stage (1) is selectively provided to easily connect to different configurations of the wiper arms (104, 105), thus increasing applicable scope.

## Description

### BACKGROUND OF THE INVENTION

### Field of the Invention

The present invention relates generally to a connection structure of a windshield wiper, and more particularly to a universal connection element of the windshield wiper.

### Description of Prior Art

A windshield wiper for a vehicle is installed on a vehicle window of the vehicle. In general, a connection configuration of the windshield wiper is that a wiper blade is installed under a combining assembly and also a wiper arm is connected on the combining assembly. Hence, the wiper blade is driven by the wiper arm via the combining assembly. In addition, the wiper blade can be stably attached on the vehicle window of the vehicle and the windshield wiper is repeatedly wiped on the vehicle window by applying force on the windshield wiper, thus wiping water and dirt attached on the vehicle window by repeatedly swishing the windshield wiper.

At present in the market, a variety of combining elements are designed according to wiper arms and wiper blades because of different functions and configurations of the windshield wipers. The prior art combining elements mainly includes a supporting element, a fixing stage, and a combining element. The supporting element is provided to support the wiper blade, the fixing stage is installed on the supporting element, the combining element is assembled at an end terminal of the wiper arm, and the fixing stage is mutually connected to the combining element so that the wiper arm drives the wiper blade via the combining elements.

However, it requires additional parts and combination molds to meet customer demands because of different configurations of the wiper arms and the combining elements, thus increasing manufacturing costs. In addition, it also requires other kinds of combining elements for assembling windshield wipers, thus increasing inventory costs and increasing assembly time and work.

Accordingly, it is desirable to provide a universal connection element of a windshield wiper to overcome the above-mentioned disadvantages.

### SUMMARY OF THE INVENTION

An object of the present invention is to provide a universal connection element of a windshield wiper for providing a combining stage to easily connect to different configurations of the wiper arms, thus increasing applicable scope.

In order to achieve the above-mentioned object, a universal connection element of a windshield wiper is provided. The connection element has a combining stage. The combining stage has a fastening portion, a roof wall formed along a direction opposite to the fastening portion, two side walls formed corresponding to the roof wall, and an end wall. Each side wall has a through hole corresponding to each other. The end wall has an elastic piece extending therefrom and an end terminal of the elastic piece has a raised portion arranged on the same plane to the roof wall.

The present invention also has following effects. The combining stage can be selectively provided to connect to different configurations of wiper arms. Also, it requires no additional parts and combination molds so that the connection element of the present invention can be used to connect to a variety of wiper arms, thus meeting customer demands and saving manufacturing costs. In addition, it also requires no other kinds of connection elements for assembling the windshield wiper, thus reducing inventory costs and increasing assembly convenience.

### BRIEF DESCRIPTION OF DRAWING

The features of the invention believed to be novel are set forth with particularity in the appended claims. The invention itself, however, may be best understood by reference to the following detailed description of the invention, which describes an exemplary embodiment of the invention, taken in conjunction with the accompanying drawings, in which:
Fig. 1 is a schematic perspective view of a connection element according to the present invention;
Fig. 2 is another schematic perspective view of the connection element according to the present invention;
Fig. 3 is a schematic cross-sectional view of the connection element according to the present invention;
Fig. 4 is a schematic view of using status of the connection element according to the present invention;
Fig. 5 is another schematic view of using status of the connection element according to the present invention;
Fig. 6 is further another schematic view of using status of the connection element according to the present invention;
Fig. 7 is a schematic assembled view of the connection element according to the present invention;
Fig. 8 is another schematic assembled view of the connection element according to the present invention;
Fig. 9 is another schematic cross-sectional view of the connection element according to the present invention;
Fig. 10 is a schematic view of using status of the connection element according to another embodiment of the present invention;
Fig. 11 is a schematic assembled view of the connection element according to another embodiment of the present invention;
Fig. 12 is another schematic assembled view of the connection element according to another embodiment of the present invention;
Fig. 13 is further another schematic assembled view of the connection element according to another embodiment of the present invention;
Fig. 14 is a schematic view of using status of the connection element according to further another embodiment of the present invention;
Fig. 15 is a schematic assembled view of the connection element according to further another embodiment of the present invention; and
Fig. 16 is a schematic cross-sectional view of the connection element according to further another embodiment of the present invention.

### DETAILED DESCRIPTION OF THE INVENTION

Reference will now be made to the drawing figures to describe the present invention in detail. Although the present invention has been described with reference to the preferred embodiment thereof, it will be understood that the invention is not limited to the details thereof.

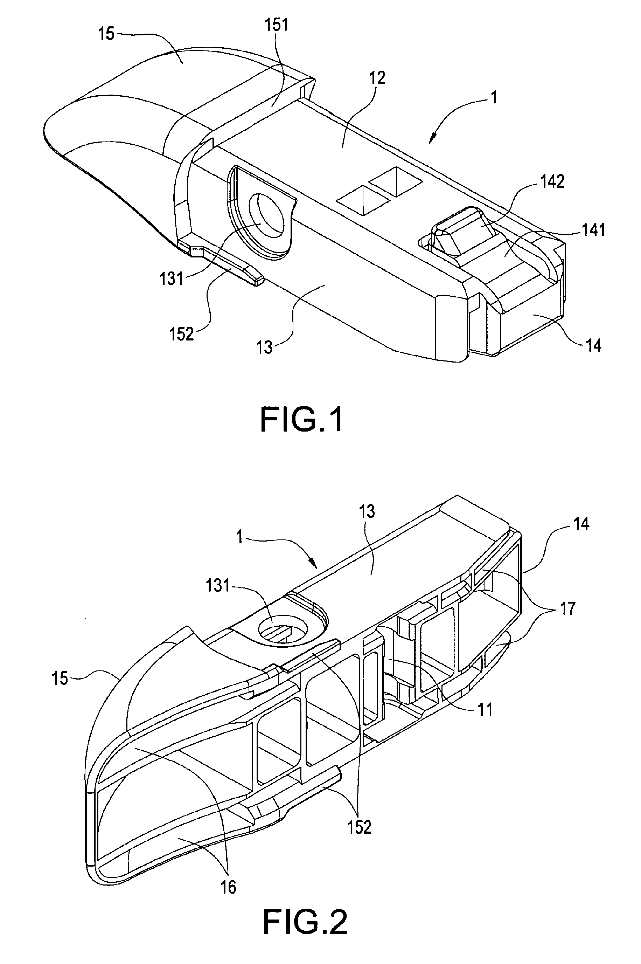

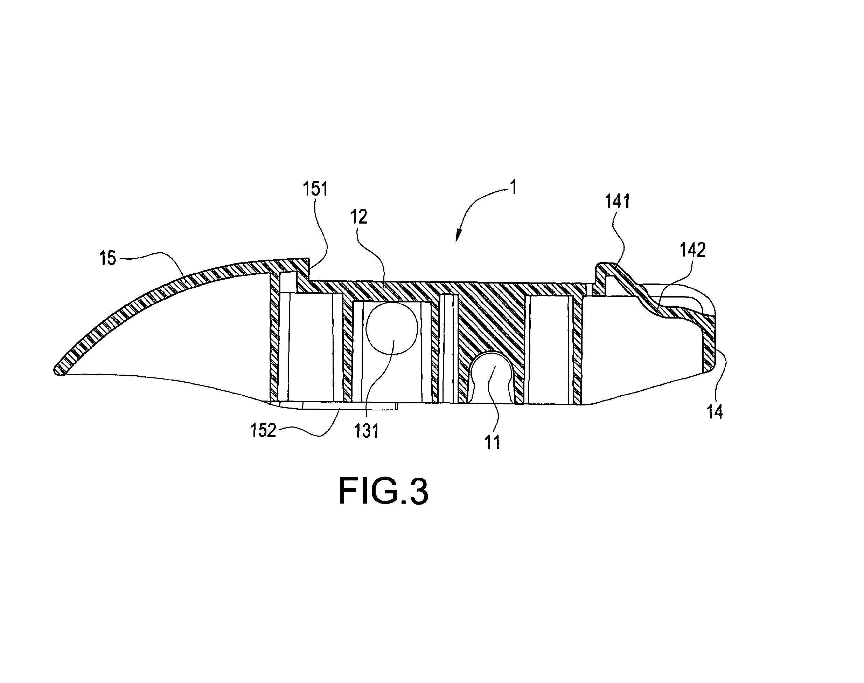

Reference is made from Fig. 1 to Fig. 3. The present invention discloses a universal connection element of a windshield wiper. The universal connection element mainly includes a combining stage 1.

The combining stage 1 includes a fastening portion 11, a roof wall 12 which is formed along a direction opposite to the fastening portion 11, two side walls 13 which are formed corresponding to the roof wall 12, and an end wall 14. Each of the side walls 13 has a through hole 131 and each through hole 131 is corresponding to each other. The end wall 14 has an elastic piece 141 extending therefrom. An end terminal of the elastic piece 141 has a raised portion 142 arranged on the same plane to the roof wall 12. The combining stage 1 has a protruding cover 15 extending along a direction far away from the raised portion 142. The protruding cover 15 forms a peripheral wall 151 corresponding to the roof wall 12 and the side wall 13. The peripheral wall 151 has an end terminal and each side wall 13 has a bottom terminal. The end terminal and the bottom terminals jointly project a fixture block 152. Further, the combining stage 1 has two containing chambers 16 in the fastening portion 11 adjacent to one side of the protruding cover 15. The combining stage 1 has two through chambers 17 in the fastening portion 11 adjacent to one side of the raised portion 142.

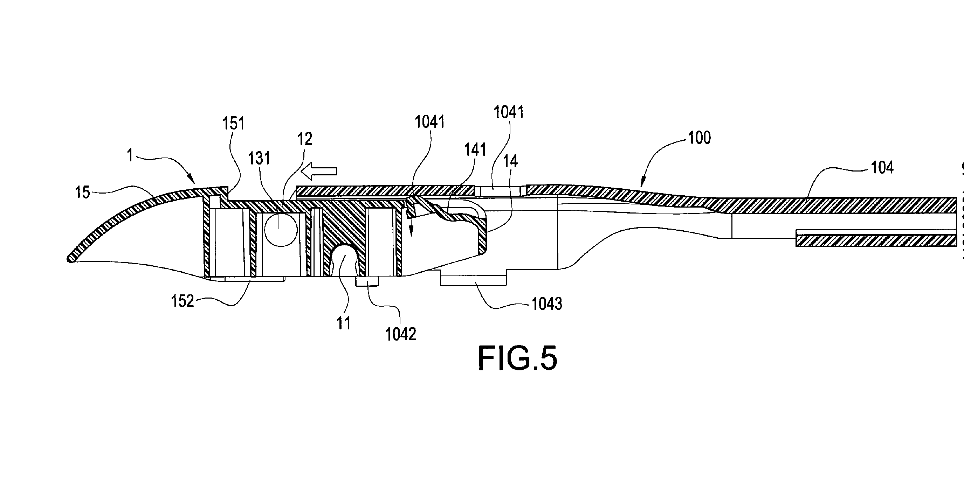

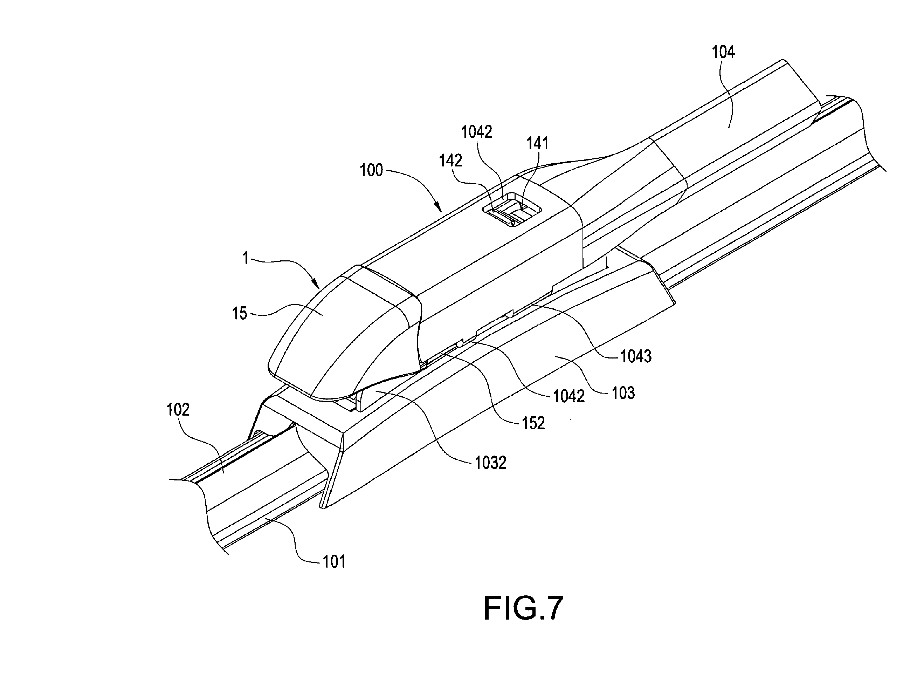

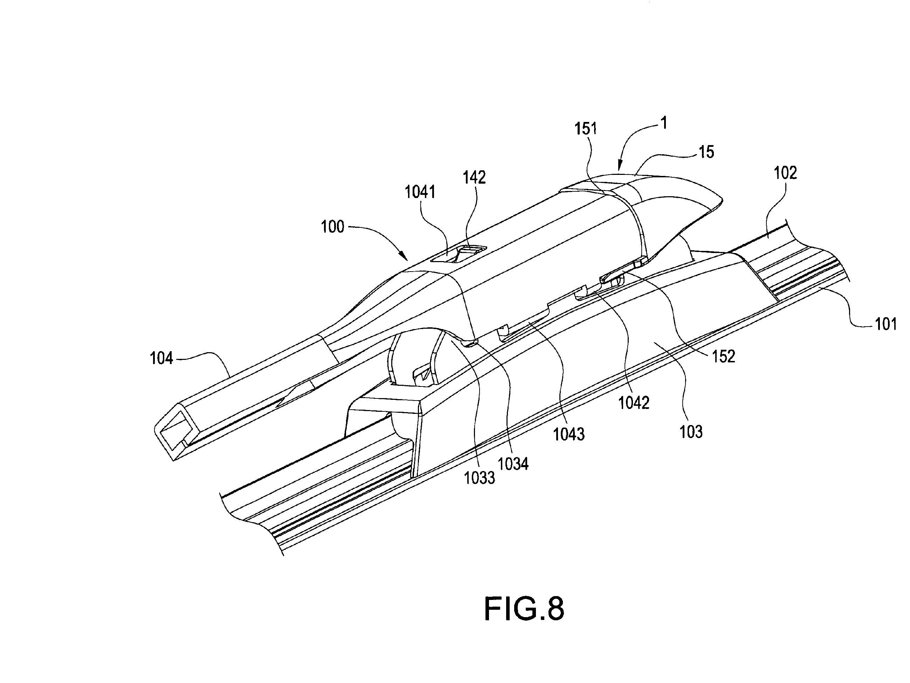

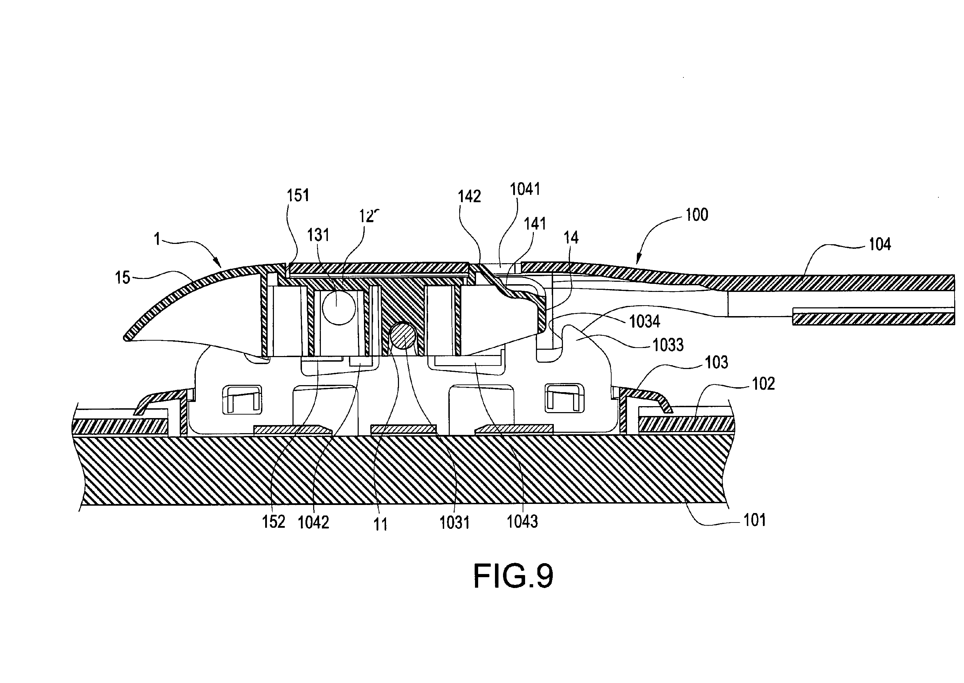

Reference is made from Fig. 5 to Fig. 9. The windshield wiper 100 includes a wiper blade 101, a supporting element 102 for supporting the wiper blade 101, a fixing stage 103 installed above the supporting element 102, and a first wiper arm 104. The fixing stage 103 has a shaft rod 1031 and a first embedded element 1032 and a second embedded element 1033 which are formed around the shaft rod 1031. The first embedded element 1032 is arranged at one side of the shaft rod 1031 and the second embedded element 1033 is arranged at the other side of the shaft rod 1031. The second embedded element 1033 has a gap 1034. The first wiper arm 104 has an opening 1041 at a top portion thereof and has a first engaging element 1042 and a second engaging element 1043 at an end portion thereof.

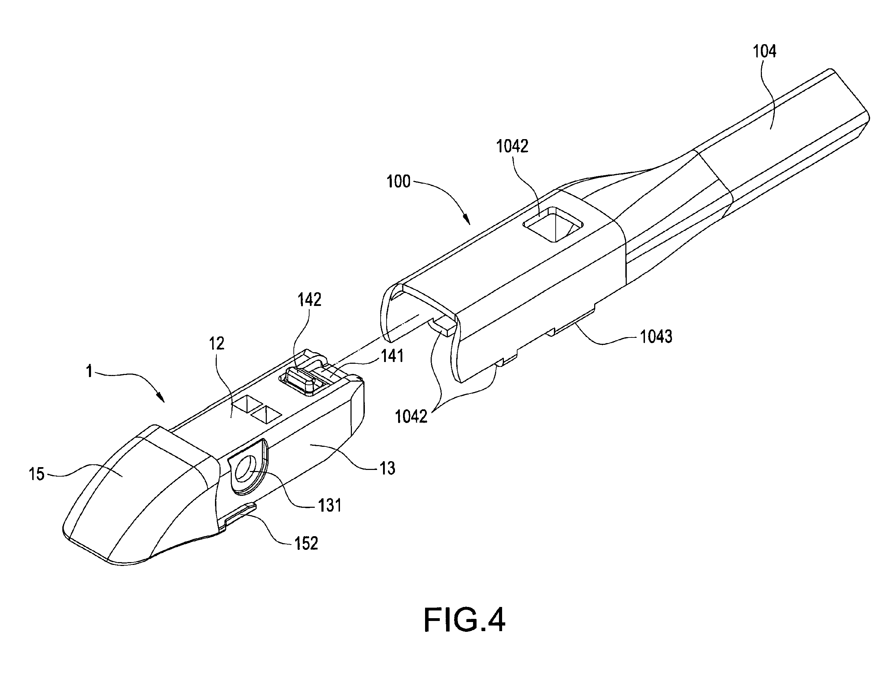

Reference is made to Fig. 4 and Fig. 5, the combination of the connection element and the first wiper arm 104 is implemented by sleeving the first wiper arm 104 on the combining stage 1. When the first wiper arm 104 slides corresponding to the roof wall 12 and the side wall 13, the first wiper arm 104 presses the raised portion 142 so that the raised portion 142 projects from an end terminal of the elastic piece 141. Accordingly, a position of the raised portion 142 is lower than that of the roof wall 12 because of an elastic deformation of the elastic piece 141, thus sleeving the first wiper arm 104 on the combining stage 1. When the first wiper arm 104 slides to contact the peripheral wall 151, the raised portion 142 is disposed corresponding to the opening 1041 so that the raised portion 142 recovers to the original position that is the same height as the roof wall 12 because the raised portion 142 is force-free. Accordingly, the raised portion 142 is fastened to the opening 1041 so that the first wiper arm 104 is fixed on the combining stage 1 through the raised portion 142. In addition, the protruding cover 15 embeds to the first wiper arm 104 so that the protruding cover 15 and the first wiper arm 104 are jointly sleeved on the combining stage 1.

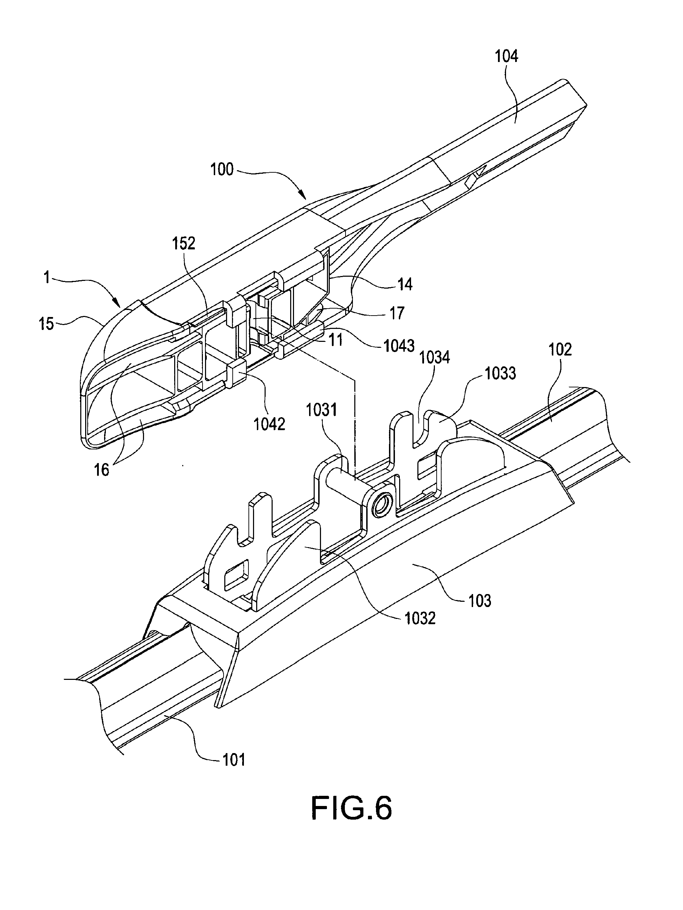

Reference is made from Fig. 6 to Fig. 9, the combination of the connection element and the fixing stage 103 is implemented as described below. The fastening portion 11 is fastened to the corresponding shaft rod 1031. The containing chambers 16 embed on the correspondingly first embedded element 1032 and the second embedded element 1033; the through chambers 17 sleeves on the corresponding first embedded element 1032 and the second embedded element 1033. Also, the end wall 14 fastens the corresponding gap 1034 so that the combining stage 1 can be stably connected on the fixing stage 103. In addition, horizontal movement of the first engaging element 1042 of the first wiper arm 104 is limited among the shaft rod 1031, the first embedded element 1032, and the fixture block 152 or among the shaft rod 1031, the second embedded element 1033, and the fixture block 152. Also, the first engaging element 1042 engages to a lower end of the combining stage 1 so that vertical movement of the first engaging element 1042 is limited. In addition, horizontal movement of the second engaging element 1043 is limited between the shaft rod 1031 and the first embedded element 1032 or between the shaft rod 1031 and the second embedded element 1033. Also, the second engaging element 1043 engages to the lower end of the combining stage 1 so that vertical movement of the second engaging element 1043 is limited. Accordingly, the combining stage 1, the fixing stage 103, and the first wiper arm 104 are mutually connected to each other for preventing loose attachment and increasing combination stability of the connection element.

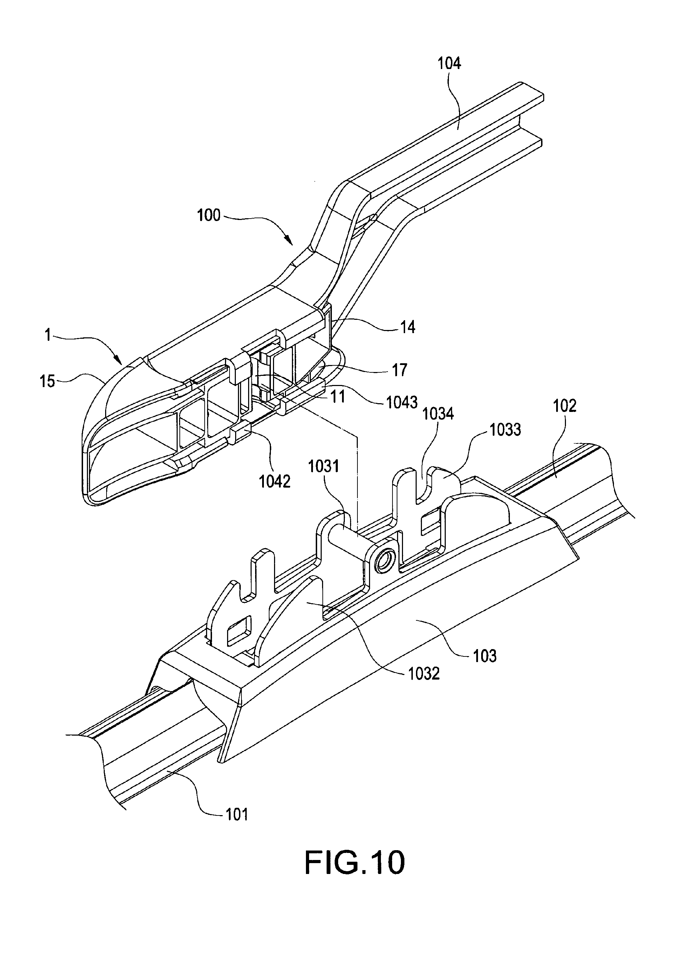

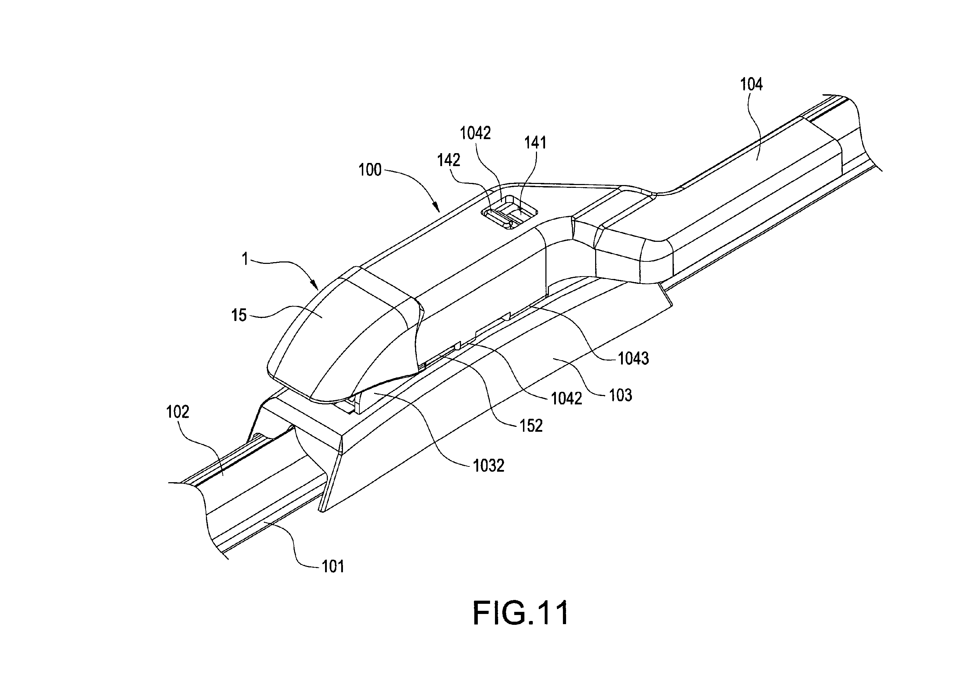

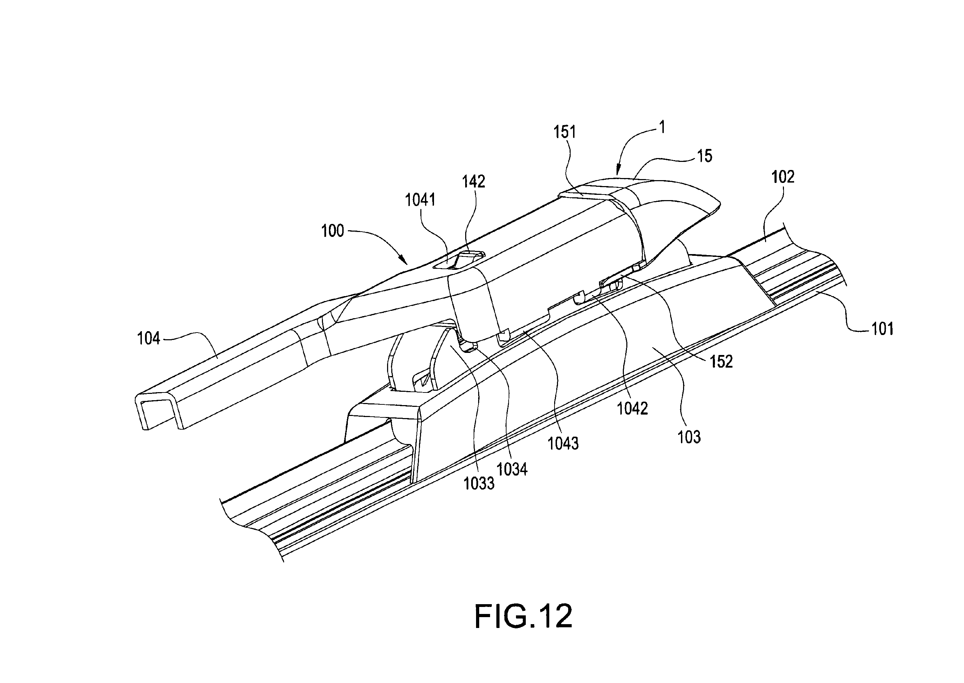

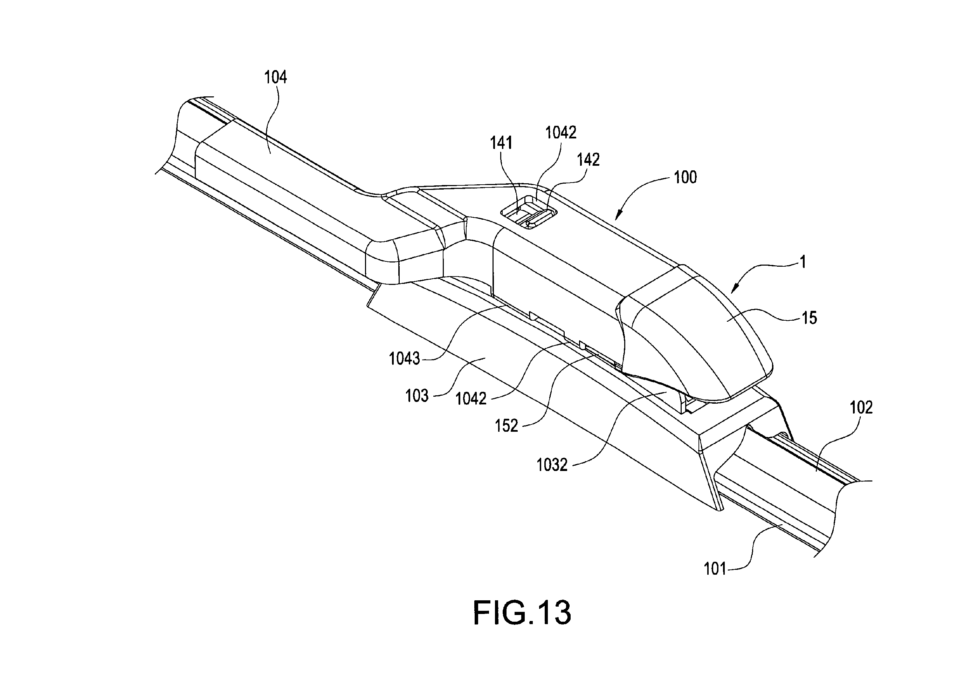

Reference is made from Fig. 10 to Fig. 13 which shows another embodiment of the first wiper arm 104 and the combination between the first wiper arm 104 and the combining stage 1 is the same as the above-mentioned embodiment. In addition, the combining stage 1 can be changed to different directions to combine the fixing stage 103 because the first embedded element 1032 and the second embedded element 1033 arranged at two sides of the fixing stage 103 are mutually symmetrical. Accordingly, the right wiper arm and left wiper arm both can be fixed on the connection element.

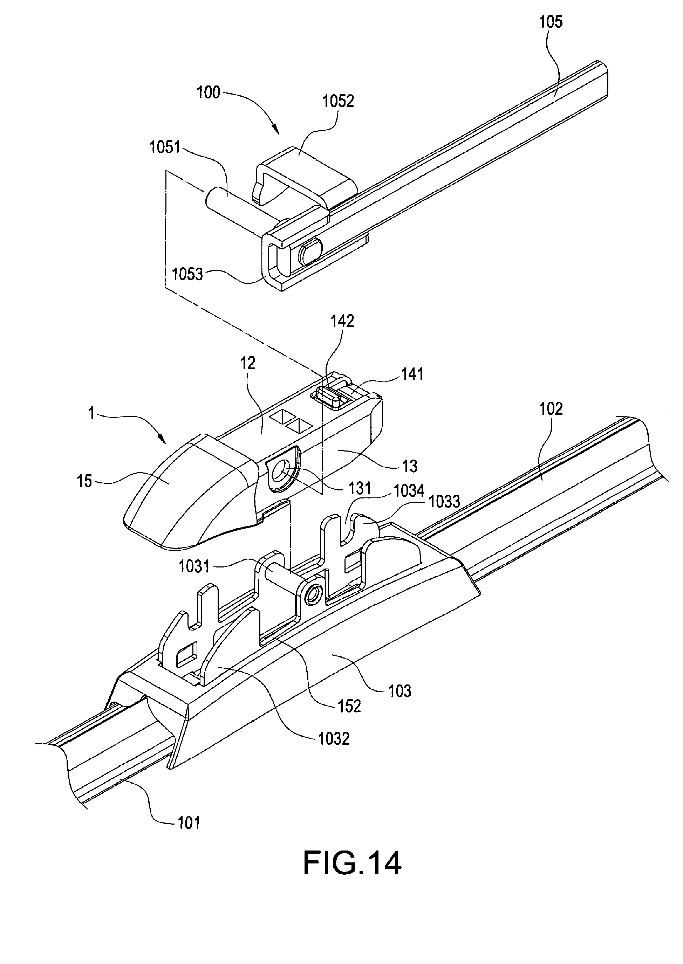

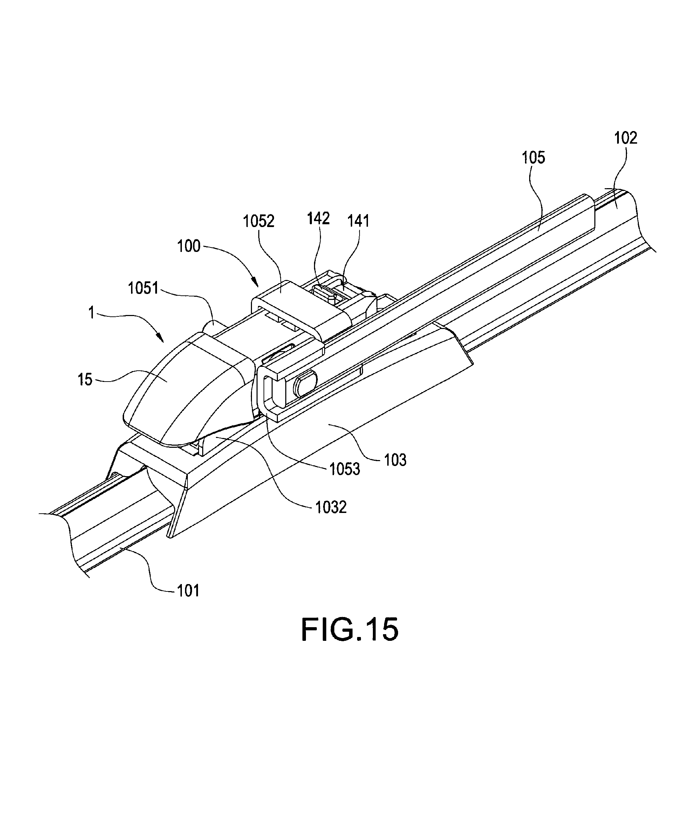

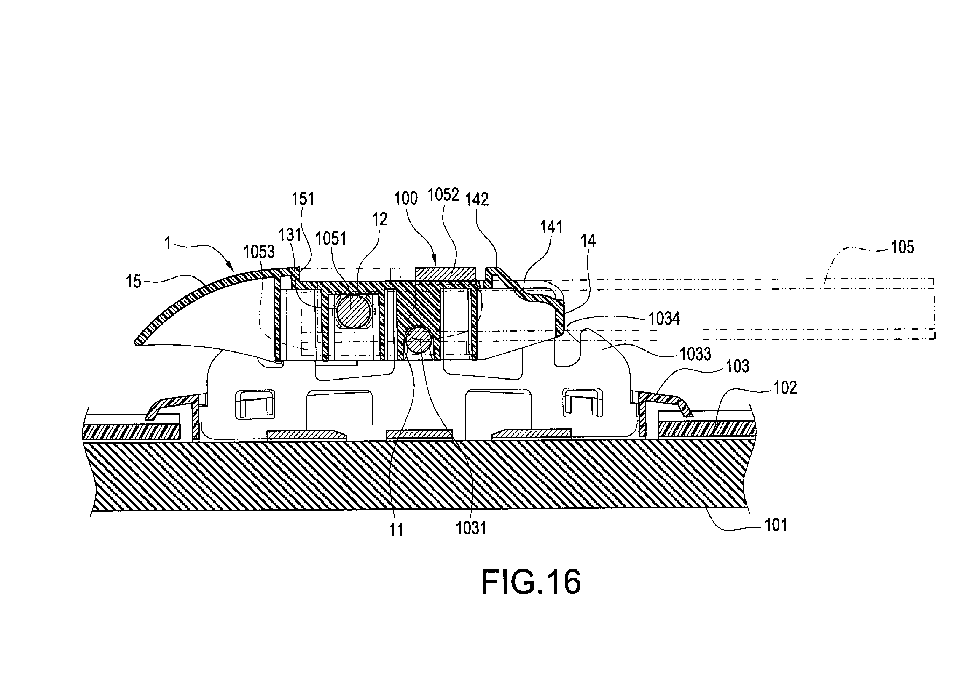

Reference is made from Fig. 14 to Fig. 16 which shows a combination between the connection element and the second wiper arm 105. The windshield wiper 100 includes a wiper blade 101, a supporting element 102 for supporting the wiper blade 101, a fixing stage 103 installed above the supporting element 102, and a second wiper arm 105. The second wiper arm 105 has a bolt 1051, a positioning element 1052, and a block 1053. The bolt 1051 is penetrated and fixed in the through hole 131. The positioning element 1052 is L-shaped and fastened corresponding to combining stage 1 to avoid the bolt 1051 being separated from the through hole 131. In addition, the block 1053 is fastened corresponding to the fixing stage 103 to avoid the production of axial displacement from the bolt 1051 so that the second wiper arm 105 can be stably connected on the combining stage 1.

Accordingly, as the above-mentioned descriptions from Fig. 4 to Fig. 16, the combining stage 1 can be selectively provided to connect to different configurations of the first wiper arm 104 or the second wiper arm 105 though the raised portion 142 or the through hole 131, respectively. Also, it requires no additional parts and combination molds so that the connection element of the present invention can be used to connect to a variety of wiper arms, thus meeting customer demands and saving manufacturing costs. In addition, it also requires no other kinds of connection elements for assembling windshield wipers, thus reducing inventory costs and increasing assembly convenience.

It is to be understood that both the foregoing general description and the following detailed description are exemplary, and are intended to provide further explanation of the invention as claimed. Other advantages and features of the invention will be apparent from the following description, drawings and claims.

## Claims

1. A universal connection element for a windshield wiper, the connection element comprising a combining stage (1); the combining stage (1) having:
a fastening portion (11);
a roof wall (12) formed along a direction opposite to the fastening portion (11);
two side walls (13) formed corresponding to the roof wall (12); and
an end wall (14);
wherein each side wall (13) has a through hole (131) corresponding to each other; the end wall (14) comprises an elastic piece (141) extending therefrom; an end terminal of the elastic piece (141) has a raised portion (142) arranged on the same plane to the roof wall (12).

2. The universal connection element of claim 1, wherein the combining stage (1) comprises a protruding cover (15) extending along a direction far away from the raised portion (142).

3. The universal connection element of claim 2, wherein the protruding cover (15) forms a peripheral wall (151) corresponding to the roof wall (12) and the side wall (13).

4. The universal connection element of claim 3, wherein the peripheral wall (151) has an end terminal and each side wall (13) has a bottom terminal, the end terminal and the bottom terminals jointly project a fixture block (152).

5. The universal connection element of claim 2, wherein the combining stage (1) has two containing chambers (16) in the fastening portion (11) adjacent to one side of the protruding cover (15).

6. The universal connection element of claim 2, wherein the combining stage (1) has two through chambers (17) in the fastening portion (11) adjacent to one side of the raised portion (142).
